# EUROPEAN PATENT APPLICATION

(11) **EP 1 467 547 A2**
(43) Date of publication of application: **13.10.2004**
(21) Application number: 03254994.1
(22) Date of filing: 11.08.2003
(51) Int. Cl.: H04M 9/08

(54) **Echo cancelling circuit, IP telephone and curl cord**

(30) Priority: 08.04.2003 JP 2003104391
(71) Applicant: Uniden Corporation, Tokyo 104-8512 (JP)
(72) Inventor: Igarashi, Kazunori, Tokyo 104-8512 (JP); Otake, Tetsuro, Tokyo 104-8512 (JP); Sugioka, Teruyasu, Tokyo 104-8512 (JP)
(74) Representative: Cross, Rupert Edward Blount

(57) **Abstract**

An object of the present invention is to reduce unwanted voice echoed back to the transmitting party in an IP telephone. In order to achieve this object, in the curl cord of the present invention, two microphone lines connected to a differential input type microphone are respectively wired at approximately the same distance from a single speaker line connected to a single end output type speaker Thereby, noise signals caused by cross-talk to the microphone lines from the speaker line transmitting the voice signal of the transmitting party will be of the same phase and same amplitude. By cancelling out these noise signals by means of common mode rejection in the differential amplifier provided in the base unit, it is possible to reduce the echoing back of unwanted voice to the transmitting party.

## Description

### BACKGROUND OF THE INVENTION

### 1. Field of the Invention

The present invention relates to echo cancelling technology for telephones, and more particularly, to technological improvements for reducing echo back caused by cross-talk and packet transmission delay in curl cords.

### 2. Description of the Related Art

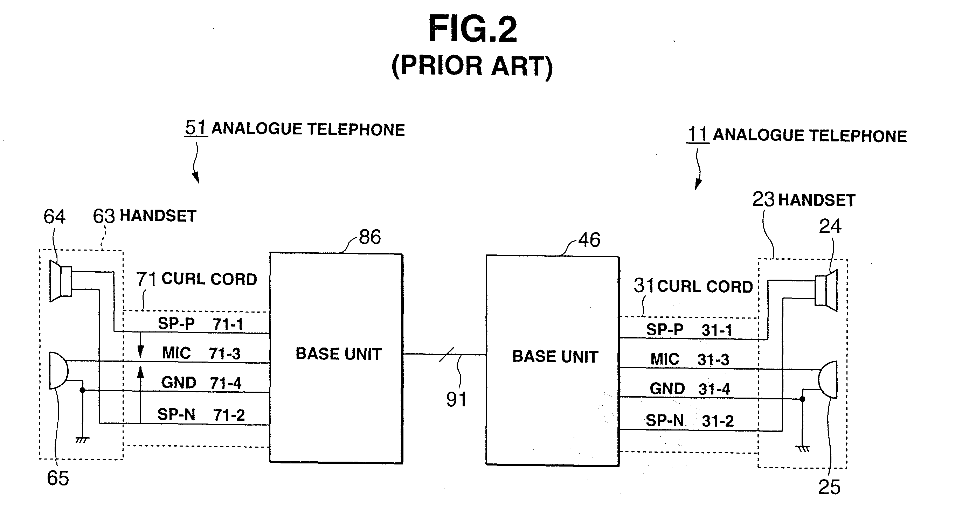

Fig. 2 is a compositional system diagram of a conventional analogue telephone. As shown in the diagram, the analogue telephone 11 comprises a handset 23, and a base unit 46, as the main components thereof. The handset 23 is constituted by a differential output type speaker 24, and a single end input type microphone 25. The curl cord 31 connected between the base unit 46 and the handset 23 comprises speaker lines (output signal lines) 31-1, 31-2 for conveying incoming voice signals, a microphone line (input signal line) 31-3 for conveying outgoing voice signals, and a ground line 31-4 forming a reference electric potential for the whole system, these lines being arranged in a spiralling or parallel fashion and being separated by an insulating sheath material.

In the analogue telephone 51, similarly, the main components are a handset 63 and a base unit 86. The speaker 64 is a differential output type and the microphone 65 is a single end input type. Furthermore, the curl cord 71 connecting the base unit 86 and the handset 63 comprises two speaker lines (output signal lines) 71-1, 71-2, a microphone line (input signal line) 71-3, and a ground line 71-4, each line being arranged in a spiralling or parallel fashion and being separated by an insulating sheath material

The wiring in the curl cords 31, 71 is respectively isolated electrically, but capacitive coupling and inductive coupling occurs being the wires, and therefore electromagnetic cross-talk occurs as a result. In the present situation, where communications signals are moving towards use of higher frequencies, it has become difficult to shut out cross-talk between signal wires sufficiently, by means of the sheath material of the curl cords 31, 71 alone. Here, if the analogue telephone 11 is taken to be the telephone of the transmitting party, and the analogue telephone 51 is taken to be the telephone of the receiving party, then the voice signal converted to an electrical signal at the microphone 25 passes through the analogue telephone 11, analogue circuit 91, and analogue telephone 51, and is conveyed to the speaker 64. Here, cross-talk occurs from the speaker lines 71-1, 71-2 in the curl cord 71 to the microphone line 71-3, and a noise signal is superimposed onto the voice signal transmitted by the microphone line 71-3, which, when amplified at the base unit 86, echoes back to the analogue telephone 11. In short-distance communications, such as local telephone calls, there is virtually no signal transmission delay, and therefore the voice signal echoing back from the analogue telephone 51 is superimposed on the side tone in the handset 23 with virtually no time delay, and hence it does not degrade the communications quality significantly.

However, if the voice data is being processed as a digital signal and VolP packets are delivered over an IP network, as in an IP telephone, then the digital signal processing will take a certain amount of time, and therefore an unwanted echo back voice will be heard several hundred milliseconds later than the side tone. The time lag between the unwanted voice echoed back and the side tone varies depending on the digital signal processing capacity of the IP telephone, variation in the routing processes of the IP network, the delay or VolP packet queuing processes, and the packet holding time of the jitter buffer used to correct fluctuation in the arrival time of the packets at the reception side, and the like, but if the unidirectional delay reaches 200 ms or above, then the communications quality is degraded. Problems of this kind are particularly notable in cases where at least one of the telephones, either that or the transmitting party and/or that of the receiving party, is an IP telephone.

### SUMMARY OF THE INVENTION

Therefore, it is an object of the present invention to resolve the aforementioned problems by providing improvement technology for reducing echo back caused by cross-talk in a curl cord.

In order to achieve the aforementioned object, the echo cancelling circuit according to the present invention comprises: a differential input type microphone; two microphone lines connected to the microphone; a single end output type speaker; one speaker line connected to the speaker; and a differential amplifier for differentially amplifying the electrical signals transmitted on the two microphone lines; the two microphone lines being wired respectively at approximately the same distance from the speaker line, and noise signals cross-talked from the speaker line to the two microphone lines being removed by common mode rejection in the differential amplifier.

By wiring the two microphone lines connected to the microphone at approximately the same distance from a single speaker line connected to the speaker, it is possible to ensure that the floating capacitances and mutual inductances formed respectively between the two microphone lines and the speaker line are approximately equal Thereby, since noise signals of approximately the same phase and same amplitude are input from the speaker line connected to the speaker, into the two microphone lines connected to the microphone, then by removing these noise signals by common mode rejection in a differential amplifier, the noise signals can be removed and the echo back of unwanted voice to the transmitting party can be reduced.

The echo cancelling circuit according to the present invention comprises: a differential input type microphone; two microphone lines connected to the microphone; a single end output type speaker; one speaker line connected to the speaker; and a differential amplifier for differentially amplifying the electrical signals transmitted on the two microphone lines; the two microphone lines being wired in such a manner that the floating capacitances and the mutual inductances formed respectively between same and the speaker line are approximately equal, and noise signals cross-talked from the speaker line to the two microphone lines being removed by common mode rejection in the differential amplifier.

By wiring the two microphone lines connected to the microphone in such a manner that the floating capacitances and the mutual inductances formed respectively between same and the speaker line connected to the speaker are approximately equal, it is possible to ensure that the noise signal introduced into the two microphone lines from the speaker line are of approximately the same phase and same amplitude. By cancelling these signals by common mode rejection in the differential amplifier, the noise signals can be removed and the echo back of unwanted voice to the transmitting party can be reduced.

The IP telephone according to the present invention is an IP telephone constituted by a handset and a base unit mutually connected by a curl cord; wherein the handset comprises a differential input type microphone and a single end output type speaker; the curl cord comprises two microphone lines connected to the microphone, one speaker line connected to the speaker, and a ground wire providing a reference potential, the two microphone lines being wired respectively at approximately the same distance from the speaker line; and the base unit comprises: a differential amplifier for differentially amplifying the electrical signals transmitted on the two microphone lines; an A/D converter for converting the analogue voice signal output by the differential amplifier into a digital voice signal; and a digital signal processing unit for generating VolP packets containing the digital voice signal output by the A/D converter.

The IP telephone according to the present invention is an IP telephone constituted by a handset and a base unit mutually connected by a curl cord; wherein the handset comprises a differential input type microphone and a single end output type speaker; the curl cord comprises two microphone lines connected to the microphone, one speaker line connected to the speaker, and a ground wire providing a reference potential, the two microphone lines being wired respectively in such a manner that that the floating capacitances and mutual inductances formed respectively between same and the speaker line are approximately equal; and the base unit comprises. a differential amplifier for differentially amplifying the electrical signals transmitted on the two microphone lines; an A/D converter for converting the analogue voice signal output by the differential amplifier into a digital voice signal; and a digital signal processing unit for generating VolP packets containing the digital voice signal output by the A/D converter.

The curl cord according to the present invention is a curl cord for connecting a handset comprising a differential input type microphone and a single end output type speaker, to a base unit comprising a differential amplifier for differentially amplifying the output signal of the microphone, comprising: two microphone lines connected to the microphone, one speaker line connected to the speaker, and a ground wire providing a reference potential; the two microphone lines being wired respectively at approximately the same distance from the speaker line.

The curl cord according to the present invention is a curl cord for connecting a handset comprising a differential input type microphone and a single end output type speaker, to a base unit comprising a differential amplifier for differentially amplifying the output signal of the microphone, comprising: two microphone lines connected to the microphone, one speaker line connected to the speaker, and a ground wire providing a reference potential; the two microphone lines being wired in such a manner that the floating capacitances and mutual inductances formed between same and the speaker line are approximately equal.

### BRIEF DESCRIPTION OF THE DRAWINGS

Fig. 1 is a compositional system diagram of an IP telephone according to an embodiment of the present invention; and
Fig. 2 is a compositional system diagram of a conventional analogue telephone.

### DESCRIPTION OF THE PREFERRED EMBODIMENTS

Below, a preferred embodiment of the present invention is described.

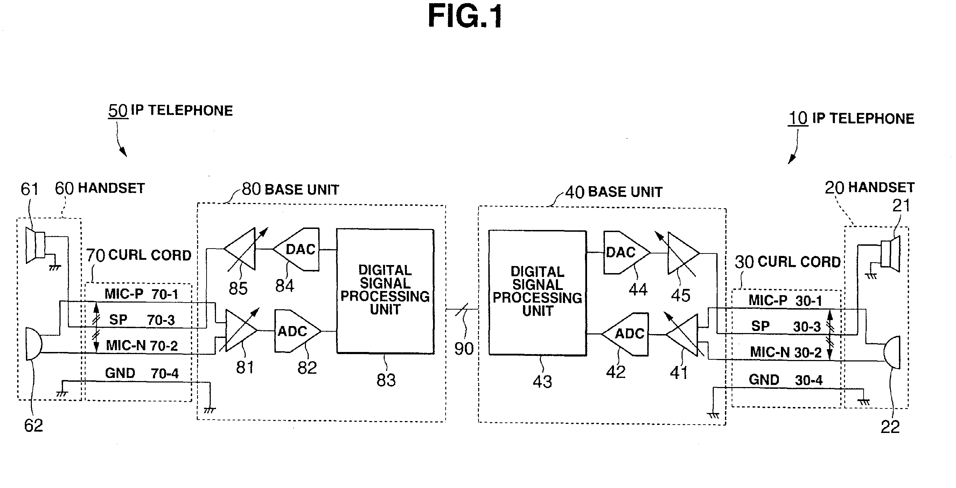

Fig. 1 is a compositional system diagram of an IP telephone according to an embodiment of the present invention. The IP telephone 10 comprises a handset 20 and a base unit 40, as the main components thereof. The handset 20 is constituted by a single end output type (single wire earth type) speaker 21, and a differential input type microphone 22. The curl cord 30 connected between the base unit 40 and the handset 20 comprises the two differential input microphone lines (input signal lines) 30-1, 30-2 for conveying the outgoing voice signal converted to an electrical signal, a speaker line (output signal line) 30-3 for conveying the incoming voice signal converted to an electrical signal, and a ground line 30-4 forming a reference electric potential for the whole system, these lines being arranged in a spiralling or parallel fashion and being separated by an insulating covering material.

Here, the microphone line 30-1 is a signal line connected to a noninverting input terminal of the differential amplifier 41, described hereinafter, and the microphone line 30-2 is a signal line connected to an inverting input terminal of the differential amplifier 41. Furthermore, the electric potential of the ground line 30-4 is the same as the ground potential of the differential amplifier 41, whilst also being the same as the potential of the earth terminal of the microphone 22. Furthermore, the spatial distances from the respective microphone lines 30-1, 30-2, to the speaker line 30-3, are set so as to be virtually equal distances.

The base unit 40, on the other hand, comprises: a differential amplifier 41 for amplifying the differential between input signals from the microphone 22 and outputting an analogue voice signal; an A/D converter 42 for converting the analogue voice signal to a digital voice signal by sampling at 8 kHz; a digital signal processing unit 43 for generating VolP packets by appending an RTP header, a UDP header and an IP header to the digital voice signal, after bandwidth compression of the voice signal by means of a CS-ACELP method, of the like, and transmitting said packets to an IP network 90, as well as extracting digital voice signal from VolP packets received from the IP network 90; a D/A converter 44 for converting a digital voice signal to an analogue voice signal; and a speaker amplifier 45 for amplifying the analogue voice signal.

In the IP telephone 50, similarly, the main components are a handset 60 and a base unit 80. The speaker 61 is a single end output type and the microphone 62 is a differential input type. The curl cord 70 connected between the base unit 60 and the handset 80 comprises the two differential input microphone lines 70-1, 70-2 of the microphone 62, a speaker line 70-3 for conveying the incoming voice signal converted to an electrical signal, and a ground line 70-4 forming a reference electric potential for the whole system, these lines being arranged in a spiralling or parallel fashion and being separated by an insulating covering material. Furthermore, the electric potential of the ground line 70-4 is the same as the ground potential of the differential amplifier 81, described hereinafter, whilst also being the same as the potential of the earth terminal of the speaker 61. Furthermore, the spatial distances from the respective microphone lines 70-1, 70-2, to the speaker line 70-3, are set so as to be virtually equal distances. Similarly to the base unit 60, the base unit 80 comprises a differential amplifier 81, an A/D converter 82, a digital signal processing unit 83, a D/A converter 84, and a speaker amplifier 85.

In the aforementioned composition, if the IP telephone 10 is taken to be the telephone of the transmitting party, and the IP telephone 50 is taken to be the telephone of the receiving party, then the voice signal input from the microphone 22 is conveyed via the IP telephone 10, IP network 90, and IP telephone 50, to the speaker 61. Here, cross-talk noise is introduced into the microphone lines (induced line) 70-1, 70-2 by the transmitting party's voice signal transmitted on the speaker line (inducing line) 70-3. This cross-talk noise is a combination of a backward cross-talk noise advancing along the microphone lines 70-1, 70-2 towards the differential amplifier 81, and a forward cross-talk noise advancing towards the speaker 61.

Here, since the spatial distances from the respective microphone lines 70-1, 70-2 to the speaker line 70-3 are set so as to be virtually equal distances, then taking the floating capacitance between the microphone line 70-1 and the speaker line 70-3 to be C1, the mutual inductance thereof to be L1, the floating capacitance between the microphone line 70-2 and the speaker line 70-3 to be C2, and the mutual inductance thereof to be L2, a state of C1 = C2 and L1 = L2 is approximated. Under these conditions, the cross-talk noise signal induced by the capacitive coupling caused by the floating capacitance C1 between the microphone line 70-1 and the speaker line 70-3 and the inductive coupling caused by the mutual inductance L1 thereof, will be a signal of the same phase and same amplitude as the cross-talk noise signal induced by the capacitive coupling caused by the floating capacitance C2 between the microphone line 70-2 and the speaker line 70-3 and the inductive coupling caused by the mutual inductance L2 thereof.

In seeking to achieve approximately equal floating capacitances and mutual inductances between the microphone lines 70-1, 70-2 and the speaker line 70-3, desirably, the microphone lines 70-1, 70-2 should be wired in a symmetrical fashion with respect to the speaker line 70-3 For example, if the signal lines are wired in a spiral fashion in the curl cord 70, then desirably the microphone lines 70-1, 70-2 should be wired with approximately equal spiralling pitch and spiralling radius, and the like.

Consequently, the backward cross-talk noise signals advancing along the microphone lines 70-1, 70-2 towards the differential amplifier 81 will be signals of the same phase and same amplitude, and these cross-talk noise signals will be removed by common mode rejection in the differential amplifier 81. Furthermore, in the differential amplifier 81, the voice signal forming the original signal component input via the microphone 62 is amplified. Thereby, the echoing back of unwanted voice to the transmitting party can be reduced satisfactorily. Here, the echo cancelling circuit of the present invention is formed by the speaker 61, microphone 62, curl cord 70 and differential amplifier 81 described above.

In the present embodiment, a case where IP telephones are used by both the transmitting party and the receiving party was described, but the present invention is not limited to this, and an IP telephone may be used at least by either the transmitting party or the receiving party. Moreover, the present embodiment described a case where Voice over IP was used as a transmission protocol for the voice data, but the present invention is not limited to this, and Voice over FR, Voice over ATM, or the like, may be used, provided that the protocol applied allows voice data to be converted to packets and transmitted over a network.

According to the present invention, by ensuring that respective microphone lines connected to a differential input type microphone are wired at approximately the same distance from a speaker line connected to a single end output type speaker, then it is possible to ensure that the cross-talk signals from the speaker line to the respective microphone lines will be of the same phase and the same amplitude. By removing these noise signals by means of common mode rejection in the differential amplifier, it is possible to reduce the echoing back of unwanted voice to the transmitting party.

According to the present invention, by ensuring that respective microphone lines connected to a differential input type microphone are wired so as to cause approximately the same floating capacitance and mutual inductance with respect to a speaker line connected to a single end output type speaker, then it is possible to ensure that the cross-talk signals from the speaker line to the respective microphone lines are of the same phase and the same amplitude. By removing these noise signals by means of common mode rejection in the differential amplifier, it is possible to reduce the echoing back of unwanted voice to the transmitting party.

## Claims

1. An echo cancelling circuit comprising:
a differential input type microphone;
two microphone lines connected to said microphone;
a single end output type speaker;
one speaker line connected to said speaker; and
a differential amplifier for differentially amplifying the electrical signals transmitted on said two microphone lines;
wherein said two microphone lines are wired respectively at approximately the same distance from said speaker line, and noise signals cross-talked from said speaker line to said two microphone lines are removed by common mode rejection in said differential amplifier.

2. An echo cancelling circuit comprising:
a differential input type microphone;
two microphone lines connected to said microphone;
a single end output type speaker;
one speaker line connected to said speaker; and
a differential amplifier for differentially amplifying the electrical signals transmitted on said two microphone lines;
wherein said two microphone lines are wired in such a manner that the floating capacitances and the mutual inductances formed respectively between said microphone lines and said speaker line are approximately equal, and noise signals cross-talked from said speaker line to said two microphone lines are removed by common mode rejection in said differential amplifier

3. An IP telephone constituted by a handset and a base unit mutually connected by a curl cord;
wherein said handset comprises a differential input type microphone and a single end output type speaker;
said curl cord comprises two microphone lines connected to said microphone, one speaker line connected to said speaker, and a ground wire providing a reference potential, said two microphone lines being wired respectively at approximately the same distance from said speaker line; and
said base unit comprises: a differential amplifier for differentially amplifying the electrical signals transmitted on said two microphone lines; an A/D converter for converting the analogue voice signal output by said differential amplifier into a digital voice signal; and a digital signal processing unit for generating VolP packets containing the digital voice signal output by said A/D converter.

4. An IP telephone constituted by a handset and a base unit mutually connected by a curl cord;
wherein said handset comprises a differential input type microphone and a single end output type speaker;
said curl cord comprises two microphone lines connected to said microphone, one speaker line connected to said speaker, and a ground wire providing a reference potential, said two microphone lines being wired respectively in such a manner that that the floating capacitances and mutual inductances formed respectively between said microphone lines and said speaker line are approximately equal; and
said base unit comprises: a differential amplifier for differentially amplifying the electrical signals transmitted on said two microphone lines; an A/D converter for converting the analogue voice signal output by said differential amplifier into a digital voice signal; and a digital signal processing unit for generating VolP packets containing the digital voice signal output by said A/D converter.

5. A curl cord for connecting a handset comprising a differential input type microphone and a single end output type speaker, to a base unit comprising a differential amplifier for differentially amplifying the output signal of said microphone,
wherein said curl cord comprises two microphone lines connected to said microphone, one speaker line connected to said speaker, and a ground wire providing a reference potential; and
said two microphone lines are wired respectively at approximately the same distance from said speaker line.

6. A curl cord for connecting a handset comprising a differential input type microphone and a single end output type speaker, to a base unit comprising a differential amplifier for differentially amplifying the output signal of said microphone,
wherein said curl cord comprises two microphone lines connected to said microphone, one speaker line connected to said speaker, and a ground wire providing a reference potential; and
said two microphone lines are wired in such a manner that the floating capacitances and mutual inductances formed respectively between said microphone lines and said speaker line are approximately equal.
